# EUROPÄISCHE PATENTSCHRIFT

(11) **EP 2 085 909 B1**
(45) Veröffentlichungstag und Bekanntmachung des Hinweises auf die Patenterteilung: **05.10.2011**
(21) Anmeldenummer: 09100034.9
(22) Anmeldetag: 13.01.2009
(51) Int. Cl.: G06K 7/00, G06K 13/08, G07C 5/08

(54) **Karteneinzugsvorrichtung**
Card entering device
Dispositif d'introduction de carte

(30) Priorität: 30.01.2008 DE 102008006838
(43) Veröffentlichungstag der Anmeldung: 05.08.2009
(73) Patentinhaber: Continental Automotive GmbH, 30165 Hannover (DE)
(72) Erfinder: Wahler, Torsten, 78073 Bad Dürrheim (DE)

(56) Entgegenhaltungen:
- WO-A-03/073361
- WO-A-2004/100076
- US-A- 4 724 310

## Beschreibung

Die Erfindung bezieht sich auf eine Karteneinzugsvorrichtung, insbesondere für einen Fahrtschreiber eines Kraftfahrzeugs, zum vollständigen Einzug einer Karte, insbesondere einer Chipkarte, die an ihrer Oberfläche zu ihrem Chip führende erste Kontakte aufweist, mit einer Transportvorrichtung, die einen Aufnahmeschlitz mit einer Einführöffnung zur Aufnahme der Karte aufweist, die bis in eine Einführposition in den Aufnahmeschlitz einführbar ist, wobei von einer ersten Sensorik das Erreichen der Einführposition durch die Karte erfassbar ist, wobei die Transportvorrichtung in einem Schacht geführt von einem Antrieb auf einem Transportweg zwischen einer Ausfahrposition und einer Einzugsposition translatorisch bewegbar antreibbar ist, wobei der Antrieb durch ein Signal der ersten Sensorik aktivierbar ansteuerbar ist, mit einem Kartenleser, der zweite Kontakte aufweist, die in einer Datenleseposition der Karte mit den ersten Kontakten verbindbar sind, wobei das Befinden der Karte in der Datenleseposition von einer zweiten Sensorik erfassbar ist.

Derartige digitale Fahrtschreiber verwenden als Karte eine Chipkarte, wobei bei in den Fahrtschreiber eingeführter Chipkarte ein Austausch von fahrer- und fahrzeugspezifischen Daten zwischen der Chipkarte und einer Lese- und Speichereinheit erfolgt.

Während der Aufzeichnung von Daten bei der Benutzung des Fahrzeugs darf die Chipkarte unter keinen Umständen von außen entnommen oder aus der Kartenaufnahmevorrichtung ausgeworfen werden können.

Dabei muss die Chipkarte vollständig eingeführt und verriegelt werden und die Verriegelung muss absolut sicher gegen Manipulation sein.

Bei einer derartigen Karteneinzugsvorrichtung ist es bekannt, den Kartenleser sowie die erste und die zweite Sensorik an einem ortsfesten Bauteil der Karteneinzugsvorrichtung anzuordnen. Diese Ausbildung erfordert eine aufwendige Montage.

Aus WO 2004/100076 A ist eine Kartenaufnahmevorrichtung und ein Verfahren zur Aufnahme einer Karte in die Kartenaufnahmevorrichtung, insbesondere für einen Fahrtschreiber in einem Kraftfahrzeug, mit vier an einer Leiterplatte angeordneten Sensoren bekannt.

Weiterhin ist aus US 4 724 310 A eine Schreib- und Leseeinheit für eine IC-Karte mit mehreren, an einem Gehäuse der Schreib- und Leseeinheit angeordneten Sensoren bekannt.

Außerdem ist aus WO 03/073361 A eine Chipkarten-Aufnahmevorrichtung mit einem eine Chipkarte halternden Schlitten, welcher zwischen einer Eingabe-/Entnahmeposition und einer Lese-/Schreibposition auf einem Träger verschiebbar gelagert ist, bekannt. Dabei sind auf dem Schlitten zwei gefedert gelagerte, zangenartig gegeneinander wirkende Spannelemente vorgesehen, welche während des Einführens der Chipkarte und Verschiebens des Schlittens in die Lese-/Schreibposition jeweils federnd auf Flächen der Chipkarte aufliegen.

Aufgabe der Erfindung ist es daher eine Karteneinzugsvorrichtung der eingangs genannten Art zu schaffen, die eine einfache und unaufwendige Montage ermöglicht.

Diese Aufgabe wird erfindungsgemäß dadurch gelöst, dass der Kartenleser sowie die erste Sensorik und die zweite Sensorik an der Transportvorrichtung angeordnet sind.

Durch diese Ausbildung können der Kartenleser sowie die erste und die zweite Sensorik auf einfache Weise an der Transportvorrichtung montiert werden, ehe diese selbst in den Schacht der Karteneinzugsvorrichtung eingeführt wird.

zu einer Einsparung teurer Bauteile und deren Montage führt es, wenn die erste Sensorik und die zweite Sensorik durch ein einziges Sensorelement gebildet sind, wobei die Einführposition der Karte der Datenleseposition der Karte entspricht.

Dieses eine Sensorelement erfüllt eine Doppelfunktion, indem von ihm sowohl das Erreichen der Einführposition durch die Karte und ein Auslösen eines Starts des Antriebes als auch das Befinden der Karte in der Datenleseposition erfasst wird. Dieses Befinden in der Datenleseposition wird so lange erfasst, wie sich Karte vollständig in der Datenleseposition befindet. Bei einem auch nur teilweise Herausbewegen aus der Datenleseposition oder bei einem Nichterreichen der Datenleseposition wird dies von dem Sensorelement erfasst und der Lese- und Speichereinheit ein entsprechendes Signal zugeführt.

Zur mechanischen Bestimmung der Einführposition kann die Einführposition durch einen oder mehrere an der Transportvorrichtung angeordnete Anschläge definiert sein, an denen die Karte anschlagbar ist.

Die Transportvorrichtung kann aus einem plattenartigen Oberteil und einem plattenartigen Unterteil bestehen, wobei Unterteil und Oberteil zwischen sich den Aufnahmeschlitz bilden, voneinander weg federbeaufschlagt sind und bei Bewegung aus der Ausfahrposition in Richtung auf die Einzugsposition aufeinander zu bewegbar sind.

Ist dabei die erste Sensorik und die zweite Sensorik oder das einzige Sensorelement auf der dem Unterteil zugewandten Seite des Oberteils oder der dem Oberteil zugewandten Seite des Unterteils angeordnet, so wird das Aufeinanderzubewegen von Oberteil und Unterteil von dem Sensorelement erfasst und der Antrieb zum Einfahren der Transportvorrichtung ausgelöst.

In einfacher Ausbildung kann die erste Sensorik und/oder die zweite Sensorik oder das einzige Sensorelement ein Schalter sein, wobei vorzugsweise der Schalter ein Schließer ist, durch den bei Nichtbetätigung eine elektrische Verbindung von einer Stromquelle zu dem als Elektromotor ausgebildeten Antrieb unterbrechbar ist.

Um unmittelbar an der Karte deren Position zu erfassen, kann der Schalter von der flächigen Oberseite oder der flächigen Unterseite der Karte beaufschlagbar sein, wobei durch das Aufeinanderzubewegen von Oberteil und Unterteil auch die Karte auf das Sensorelement zu bewegt wird.

Vorzugsweise ist die erste Sensorik und/oder die zweite Sensorik oder das einzige Sensorelement nahe dem der Einführöffnung entgegengesetzten Ende des Aufnahmeschlitzes angeordnet.

Zur Führung der Transportvorrichtung kann der Schacht in Bewegungsrichtung der Transportvorrichtung sich erstreckende Führungsschlitze aufweisen, in denen die Transportvorrichtung mit ihren Seitenkanten verschiebbar geführt ist.

Weisen dabei die Führungsschlitze im Bereich der in Ausfahrrichtung gerichteten Mündung des Schachts eine größere Breite auf und gehen in Einfahrrichtung über einen rampenartigen Übergang in eine geringere Breite über, so sind Oberteil und Unterteil der in der Ausfahrposition befindlichen Transportvorrichtung zunächst in größeren Abstand voneinander.

Die Karte wird in den Aufnahmeschlitz der Transportvorrichtung eingeführt, bis sie die Einführposition durch Anlage an den Anschlägen erreicht hat.

Erfolgt ein weiteres manuelles Einschieben der Karte, wird über die Anschläge auch die Transportvorrichtung in Richtung auf die Einzugsposition zu verschoben. Dadurch gelangt die Transportvorrichtung in den Bereich geringerer Breite der Führungsschlitze, so dass Oberteil und Unterteil aufeinander zu bewegt und über die Karte die zweite Sensorik oder das einzige Sensorelement ausgelöst wird. Damit wird der Antrieb der Transportvorrichtung gestartet, der diese bis in ihre Einzugsposition bewegt und dann wieder abschaltet.

Eine Ausfahrbewegung der Transportvorrichtung wird dann wieder separat ausgelöst.

Sollte während der Einfahrbewegung oder nach Erreichen der Einzugsposition die Karte aus ihrer Einführposition im Aufnahmeschlitz herausbewegt werden, wird dies von der ersten Sensorik oder dem einzigen Sensorelement erkannt und der Antrieb in Ausfahrrichtung gestartet.

Ein Ausführungsbeispiel der Erfindung ist in der Zeichnung dargestellt und wird im Folgenden näher beschrieben. Es zeigen:
- Figur 1: eine Draufsicht einer Karteneinzugsvorrichtung mit einer Karte in Einführposition und einer Transportvorrichtung in der Ausfahrposition,
- Figur 2: einen Schnitt entlang der Linie I - I in Figur 1,
- Figur 3: einen Schnitt entlang der Linie II - II in Figur 1,
- Figur 4: eine Draufsicht der Karteneinzugsvorrichtung nach Figur 1 mit der Karte in Einführposition und der aus der Ausfahrposition in Richtung zur Einzugs- position verschobenen Transportvorrichtung,
- Figur 5: einen Schnitt entlang der Linie IV - IV in Figur 4,
- Figur 6: einen Schnitt entlang der Linie V - V in Figur 4,

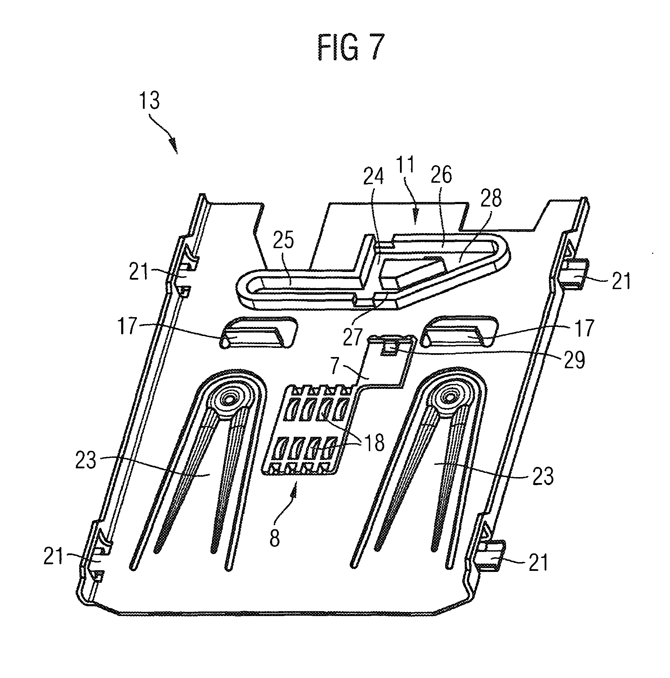

- Figur 7: eine perspektivische Draufsicht des Oberteils der Transportvorrichtung der Karteneinzugsvorrichtung nach Figur 1.

Die dargestellte Karteneinzugsvorrichtung für einen Fahrtschreiber eines Kraftfahrzeugs weist eine Trägerplatte 1 mit zwei in einem Abstand darauf angeordneten Seitenführungen 2 auf, die zwischen sich einen Schacht 3 bilden, in dem eine Transportvorrichtung 4 zwischen einer Ausfahrposition und einer Einzugsposition translatorisch geführt bewegbar ist.

Im hinteren Bereich ist auf der Trägerplatte 1 ein Antriebszahnrad 5 um eine Drehachse 6 drehbar gelagert, in deren Zähne eine nicht dargestellte Zylinderschnecke eingreift, die von einem Elektromotor unidirektional drehbar antreibbar ist. In einem radialen Abstand von der Drehachse 6 ist an dem Antriebszahnrad 5 ein zur Drehachse 6 parallel sich erstreckender Kurbelzapfen 10 hervorstehend angeordnet, der in eine erste Kulissenbahn 9 und eine zweite Kulissenbahn der Transportvorrichtung 4 eingreift, die sich quer zur Erstreckung des Bewegungswegs der Transportvorrichtung 4 im Schacht 3 parallel zur Ebene der Trägerplatte 1 erstreckt.

Die Transportvorrichtung 4 besteht aus einem plattenartigen Unterteil 12 und einem plattenartigen Oberteil 13, die zwischen sich einen Aufnahmeschlitz 14 bilden, in den durch eine Einführöffnung 16 eine Chipkarte 15 bis zur Anlage an Anschlägen 17 der Transportvorrichtung 4 einführbar ist. Dabei sind Unterteil 12 und Oberteil 13 die Dicke des Aufnahmeschlitzes 14 verringernd zueinander bewegbar.

Das Oberteil 13 weist die zweite Kulissenbahn 11 auf.

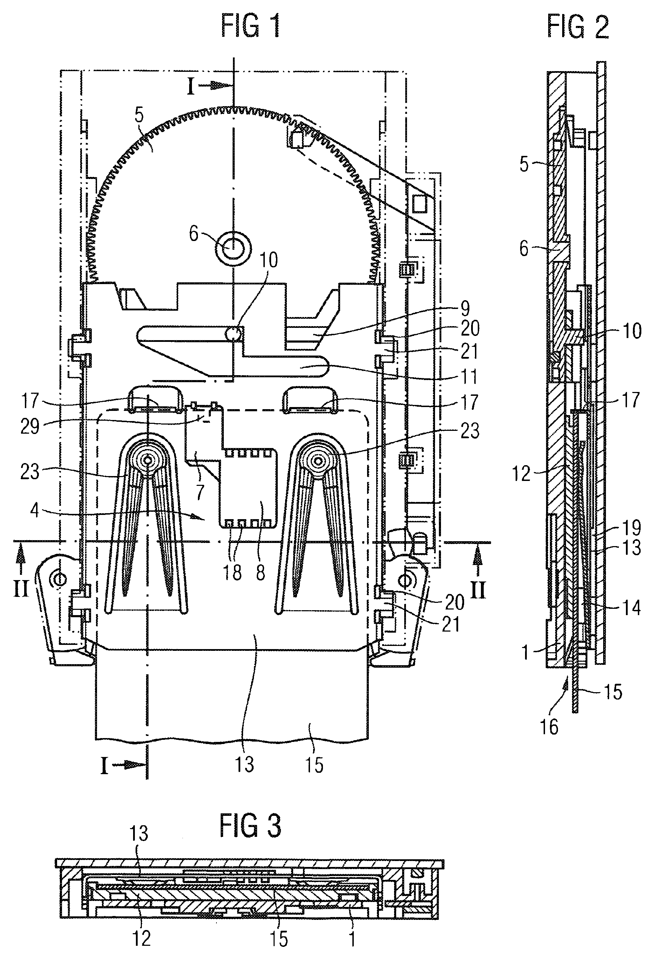

In der in den Figuren 1 bis 3 dargestellten Ausfahrposition der Transportvorrichtung 4 befindet sich der Kurbelzapfen 10 in einer der Einführöffnung 16 näheren Mittenposition zwischen den beiden seitlichen Enden der Kulissenbahn 11.

Um in die Einzugsposition zu gelangen wird das Antriebszahnrad 5 um 180° gedreht, so dass sich dann der Kurbelzapfen 10 in einer der Einführöffnung 16 entfernten Mittenposition zwischen den beiden seitlichen Enden der Kulissenbahnen 11 und 9 befindet.

Durch diese Drehung des Antriebszahnrades 5 um 180° wird durch Wandern des Kurbelzapfens 10 in den Kulissenbahnen 11 9 die Transportvorrichtung 4 aus ihrer Ausfahrposition, in der die Chipkarte 15 in den Einführschlitz 16 einführbar ist, in die Einzugsposition bewegt.

Dabei wird auch die Chipkarte 15 in die Einzugsposition bewegt.

Bei weiterer Drehung des Antriebszahnrades 5 und Wandern des Kurbelzapfens 10 in den Kulissenbahnen 11 und 9 wird die Transportvorrichtung 4 wieder in ihre Ausfahrposition bewegt, so dass die Chipkarte 15 wieder entnommen werden kann.

In den Seitenführungen 2 sind jeweils zwei hintereinander angeordnete, zum Schacht 3 hin offene Schlitze 19 ausgebildet, die an ihren der Einführöffnung näheren Enden Öffnungen 20 aufweisen, in denen seitlich hervorstehende Führungslappen 21 des Oberteils 13 von oben her einsetzbar sind, wenn sich die Transportvorrichtung 4 in der Ausfahrposition befindet.

Die Schlitze 19 besitzen an ihren in die Öffnungen 20 mündenden Enden feststehende Rampen 22, über die sich die Schlitzbreite der Schlitze 19 verringert, so dass bei einer Bewegung der Transportvorrichtung 4 aus der Ausfahrposition in Richtung zur Einzugsposition die Führungslappen 21 entlang der Rampe 22 in die Schlitze 19 eingeführt werden, wobei sich das Oberteil 13 die Dicke des Aufnahmeschlitzes 14 verringernd auf das Unterteil 12 zubewegt und eine im Aufnahmeschlitz 14 befindliche Chipkarte 15 festklemmt.

Das Festklemmen wird dabei noch durch in Einführrichtung frei ragende Federarme 23 unterstützt, deren freie Endbereiche in den Aufnahmeschlitz 14 hineinragen.

Die Federarme 23 sind dabei durch Stanz-Biegen des aus metallischem Blech gebildeten Oberteil 13 und Unterteil 12 hergestellt.

Das Oberteil 13 der Transportvorrichtung 4 ist entgegen der Kraft einer nicht dargestellten Zugfeder um einen Vorhub in Erstreckungsrichtung des Bewegungswegs der Transportvorrichtung 4 relativ zum Unterteil 12 verschiebbar.

Die Kulissenbahn 11' besteht dabei aus fünf Bahnteilen 24, 25, 26, 27 und 28, wobei ein erstes Bahnteil 24 sich mittig um eine dem Vorhub entsprechende Länge in Erstreckungsrichtung des Bewegungswegs erstreckt. Ein zweites Bahnteil 25 erstreckt sich von dem der Einführöffnung 16 näheren Ende des ersten Bahnteils 24 gerade nach rechts quer zur Richtung des Bewegungsweges und weist eine dem Abstand des Kurbelzapfens 10 zur Drehachse 6 entsprechende Länge auf. Ein drittes Bahnteil 26 erstreckt sich entgegen der Erstreckungsrichtung des zweiten Bahnteils 25 gerade nach links von dem der Einführöffnung 16 entfernteren Ende des ersten Bahnteils 24 und weist eine dem Abstand des Kurbelzapfens 10 zur Drehachse 6 entsprechende Länge auf. Ein viertes Bahnteil 27 erstreckt sich von dem der Einführöffnung 16 näheren Ende des ersten Bahnteils 24 um eine geringere Länge als der Länge des zweiten Bahnteils 25 entgegen dem zweiten Bahnteil 25. Durch ein fünftes Bahnteil 28 sind die dem ersten Bahnteil 24 entfernten Enden des dritten Bahnteils 26 und des vierten Bahnteils 27 miteinander verbunden.

Auf dem Oberteil 13 der Transportvorrichtung 4 sind auf einem gemeinsamen Träger 7 ein Kartenleser 8 und ein als Schließer ausgebildeter Schalter 29 angeordnet.

Der Kartenleser 8 besitzt feststehende Kontakte 18, die mit einer nicht dargestellten Lese- und Speichereinheit verbunden sind.

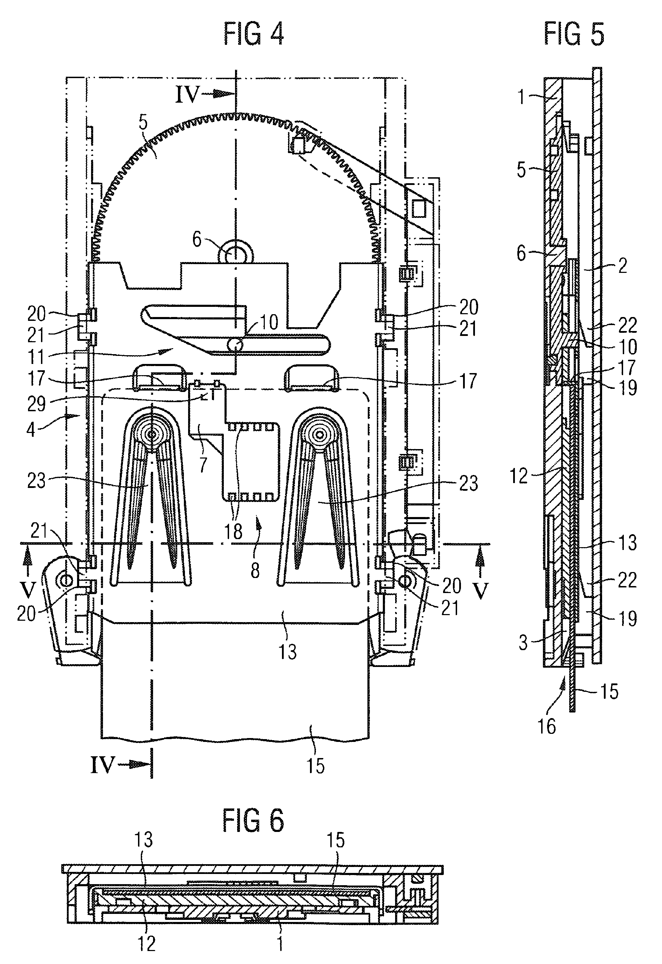

Befindet sich die Chipkarte 15 in der in den Figuren 1 bis 6 dargestellten Einführposition, in der sie mit ihrem vorderen Rand an den Anschlägen 17 in Anlage ist, sind Kontakte des Datenspeichers der Chipkarte 15 in Auflage auf den Kontakten 18 des Kartenlesers 8, so dass die Daten des auf der Chipkarte 15 angeordneten Datenspeichers in die Lese- und Speichereinheit eingelesen werden können.

Der Schalter 29 ist in unmittelbarer Nähe der Anschläge 17 angeordnet.

Befindet sich die Transportvorrichtung 4 in ihrer Ausfahrposition, kann die Chipkarte 15 bis zu Anlage an den Anschlägen 17 über die Einführöffnung 16 in den Aufnahmeschlitz 14 eingeführt werden.

Wird die Chipkarte 15 dann noch weiter in Einführrichtung beaufschlagt, so verschiebt sich das Oberteil 13 um den Vorhub entgegen der Kraft der Zugfeder weiter in Einführrichtung, bis eine Aktivierungsposition des Oberteils 13 erreicht und von diesem der Schalter 29 betätigt wird, der ein Ansteuersignal erzeugt, das einer nicht dargestellten Steuereinheit zugeführt wird. Dabei bewegt sich auch der Kurbelzapfen 10 in dem ersten Bahnteil 24 aus seiner der Einführöffnung 16 entfernten Position in eine der Einführposition näheren Position.

Die Betätigung des Schalters 29 erfolgt dadurch, dass bei der Einführbewegung des Oberteils 13 die Führungslappen 21 entlang der Rampen 22 gleiten und so das Oberteil 13 auf das Unterteil 12 zu bewegt wird.

Dadurch wird auch die Chipkarte 15 auf das Unterteil 12 zu bewegt und beaufschlagt den Schalter 29. Dies aber nur, wenn die Chipkarte 15 in Anlage an den Anschlägen 17 ist und sich somit in der Einführposition befindet.

Ist dies nicht oder nicht vollständig der Fall, erfolgt keine Betätigung des Schalters 29.

Durch die Beaufschlagung des Schalters 29 aktiviert die Steuereinheit den Elektromotor 8, der dadurch das Antriebsrad 5 um 180° entgegen dem Uhrzeigersinn drehend antreibt.

Dabei bewegt sich der Kurbelzapfen 10 auf den ersten 90° der Drehung des Antriebsrades 5 weiter in das zweite Bahnteil 25 bis zu dessen Ende, wodurch die Transportvorrichtung 4 um ihren halben Einzugsweg eingezogen wird.

Bei weiterer Drehung um weitere 90° bewegt sich der Kurbelzapfen 10 in dem zweiten Bahnteil 25 wieder zurück und zieht die Transportvorrichtung 4 vollends in ihre Einzugsposition.

Soll die Chipkarte 15 wieder entnommen werden, wird mittels eines nicht dargestellten manuell betätigbaren Schalters ein entsprechendes Signal der Steuereinheit zugeleitet, die dann den Elektromotor 8 zum Drehantrieb des Antriebszahnrades 5 um weitere 180° antreibt.

Dabei bewegt sich der Kurbelzapfen 10 über das vierte Bahnteil 27, das fünfte Bahnteil 28 und das dritte Bahnteil 26 wieder in seine Ausgangsstellung und schiebt die Transportvorrichtung 4 in ihre Ausfahrposition.

Nun kann die Chipkarte 15 wieder entnommen werden, so dass der Fahrtschreiber für ein erneutes Einführen einer Chipkarte 15 bereit ist.

## Patentansprüche

1. Karteneinzugsvorrichtung, insbesondere für einen Fahrtschreiber eines Kraftfahrzeugs, zum vollständigen Einzug einer Karte, insbesondere einer Chipkarte, die an ihrer Oberfläche zu ihrem Chip führende erste Kontakte aufweist, mit einer Transportvorrichtung, die einen Aufnahmeschlitz mit einer Einführöffnung zur Aufnahme der Karte aufweist, die bis in eine Einführposition in den Aufnahmeschlitz einführbar ist, wobei von einer ersten Sensorik das Erreichen der Einführposition durch die Karte erfassbar ist, wobei die Transportvorrichtung in einem Schacht geführt von einem Antrieb auf einem Transportweg zwischen einer Ausfahrposition und einer Einzugsposition translatorisch bewegbar antreibbar ist, wobei der Antrieb durch ein Signal der ersten Sensorik aktivierbar ansteuerbar ist, mit einem Kartenleser, der zweite Kontakte aufweist, die in einer Datenleseposition der Karte mit den ersten Kontakten verbindbar sind, wobei das Befinden der Karte in der Datenleseposition von einer zweiten Sensorik erfassbar ist, **dadurch gekennzeichnet, dass** der Kartenleser (8) sowie die erste Sensorik und die zweite Sensorik an der Transportvorrichtung (4) angeordnet sind.

2. Karteneinzugsvorrichtung nach Anspruch 1, **dadurch gekennzeichnet, dass** die erste Sensorik und die zweite Sensorik durch ein einziges Sensorelement gebildet sind, wobei die Einführposition der Karte der Datenleseposition der Karte entspricht.

3. Karteneinzugsvorrichtung nach einem der vorhergehenden Ansprüche, **dadurch gekennzeichnet, dass** die Einführposition durch einen oder mehrere an der Transportvorrichtung (4) angeordnete Anschläge (17) definiert ist, an denen die Karte anschlagbar ist.

4. Karteneinzugsvorrichtung nach einem der vorhergehenden Ansprüche, **dadurch gekennzeichnet, dass** die Transportvorrichtung (4) aus einem plattenartigen Oberteil (13) und einem plattenartigen Unterteil (12) besteht, wobei Unterteil (12) und Oberteil (13) zwischen sich den Aufnahmeschlitz (14) bilden, voneinander weg federbeaufschlagt sind und bei Bewegung aus der Ausfahrposition in Richtung auf die Einzugsposition aufeinander zu bewegbar sind.

5. Karteneinzugsvorrichtung nach Anspruch 4, **dadurch gekennzeichnet, dass** die erste Sensorik und die zweite Sensorik oder das einzige Sensorelement auf der dem Unterteil (12) zugewandten Seite des Oberteils (13) oder der dem Oberteil zugewandten Seite des Unterteils angeordnet ist.

6. Karteneinzugsvorrichtung nach einem der Ansprüche 4 und 5, **dadurch gekennzeichnet, dass** die erste Sensorik und/oder die zweite Sensorik oder das einzige Sensorelement ein Schalter (29) ist.

7. Karteneinzugsvorrichtung nach Anspruch 6, **dadurch gekennzeichnet, dass** der Schalter (29) ein Schließer ist, durch den bei Nichtbetätigung eine elektrische Verbindung von einer Stromquelle zu dem als Elektromotor ausgebildeten Antrieb unterbrechbar ist.

8. Karteneinzugsvorrichtung nach den Ansprüchen 4 und 7, **dadurch gekennzeichnet, dass** der Schalter (29) von der flächigen Oberseite oder der flächigen Unterseite der Karte beaufschlagbar ist.

9. Karteneinzugsvorrichtung nach einem der vorhergehenden Ansprüche, **dadurch gekennzeichnet, dass** die erste Sensorik und/oder die zweite Sensorik oder das einzige Sensorelement nahe dem der Einführöffnung (16) entgegengesetzten Ende des Aufnahmeschlitzes (14) angeordnet ist.

10. Karteneinzugsvorrichtung nach Anspruch 4, **dadurch gekennzeichnet, dass** der Schacht in Bewegungsrichtung der Transportvorrichtung (4) sich erstreckende Führungsschlitze aufweist, in denen die Transportvorrichtung (4) mit ihren Seitenkanten verschiebbar geführt ist.

11. Karteneinzugsvorrichtung nach Anspruch 10, **dadurch gekennzeichnet, dass** die Führungsschlitze im Bereich der in Ausfahrrichtung gerichteten Mündung des Schachts (3) eine größere Breite aufweisen und in Einfahrrichtung über einen rampenartigen Übergang (22) in eine geringere Breite übergehen.

## Claims

1. Card intake device, particularly for a tachograph of a motor vehicle, for the complete intake of a card, particularly of a chip card, which on its surface comprises first contacts leading to its chip, with a transport device having a receiving slot with an insertion opening for receiving the card, which can be inserted into the receiving slot as far as into an insertion position, wherein by a first sensor device the reaching of the insertion position by the card can be registered, wherein the transport device, guided in a shaft, is drivable by a drive on a transport path between an extension position and a retraction position in a translatorically moveable manner, wherein the drive can be activatably selected through a signal of the first sensor device, with a card reader having second contacts which can be connected in a data reading position of the card with the first contacts, wherein the presence of the card in the data reading position can be registered by a second sensor device, **characterized in that** the card reader (8) as well as the first sensor device and the second sensor device are arranged on the transport device (4).

2. Card intake device according to Claim 1, **characterized in that** the first sensor device and the second sensor device are formed by a single sensor element, wherein the insertion position of the card corresponds to the data reading position of the card.

3. Card intake device according to any one of the preceding claims, **characterized in that** the insertion position is defined by one or a plurality of stops (17) arranged on the transport device (4), at which the card can be brought to stop.

4. Card intake device according to one of the preceding claims, **characterized in that** the transport device (4) consists of a plate-like upper part (13) and a plate-like lower part (12), wherein the lower part (12) and upper part (13) between them form the receiving slot (14), are spring-loaded away from each other and upon movement out of the extension position in the direction of the retraction position can be moved towards each other.

5. Card intake device according to Claim 4, **characterized in that** the first sensor device and the second sensor device or the only sensor element is arranged on the side of the upper part (13) facing the lower part (12) or on the side of the lower part facing the upper part.

6. Card intake device according to one of the preceding Claims 4 and 5, **characterized in that** the first sensor device and/or the second sensor device or the only sensor element is/are a switch (29).

7. Card intake device according to Claim 6, **characterized in that** the switch (29) is a normally open contact, through which upon non-actuation an electrical connection from a current source to the drive designed as electric motor can be interrupted.

8. Card intake device according to Claims 4 and 7, **characterized in that** the switch (29) is loadable by the flat top or the flat bottom of the card.

9. Card intake device according to one of the preceding claims, **characterized in that** the first sensor device and/or the second sensor device or the only sensor element is/are arranged near the end of the receiving slot (14) opposite the insertion opening (16).

10. Card intake device according to Claim 4, **characterized in that** the shaft comprises guide slots extending in the movement direction of the transport device (4), in which the transport device (4) is guided laterally displaceably with its lateral edges.

11. Card intake device according to Claim 10, **characterized in that** the guide slots in the region of the termination of the shaft (3) directed in the extension direction have a greater width and in the retraction direction via a ramp-like transition (22) merge into a reduced width.

## Revendications

1. Dispositif d'introduction de carte, notamment pour un contrôlographe d'un véhicule automobile, pour introduire complètement une carte, notamment une carte à puce, qui a sur sa surface des premiers contacts menant à sa puce, comprenant un dispositif de transport, qui a une fente de réception ayant une ouverture d'introduction pour la réception de la carte, qui peut être introduite dans la fente de réception jusque dans une position d'introduction, dans lequel le fait que la position d'introduction est atteinte par la carte peut être détecté par un premier système de capteur, le dispositif de transport pouvant être entraîné en déplacement en translation en étant guidé dans un puits par un entraînement sur un chemin de transport entre une position sortie et une position d'introduction, dans lequel l'entraînement peut être commandé en pouvant être activé par un signal du premier système de capteur, comprenant un lecteur de carte, qui a des deuxièmes contacts, qui dans une position de lecture de données de la carte peuvent être reliés aux premiers contacts, le fait que la carte se trouve dans la position de lecture de données pouvant être détecté par un deuxième système de capteur, **caractérisé en ce que** le lecteur (8) de carte ainsi que le premier système de capteur et le deuxième système de capteur sont disposés sur le dispositif (4) de transport.

2. Dispositif d'introduction de carte suivant la revendication 1, **caractérisé en ce que** le premier système de capteur et le deuxième système de capteur sont formés par un unique élément de capteur, la position d'introduction de la carte correspondant à la position de lecture de données de la carte.

3. Dispositif d'introduction de carte suivant l'une des revendications précédentes, **caractérisé en ce que** la position d'introduction est définie par une ou par plusieurs butées (17), qui sont disposées sur le dispositif (4) de transport et sur lesquelles la carte peut buter.

4. Dispositif d'introduction de carte suivant l'une des revendications précédentes, **caractérisé en ce que** le dispositif (4) de transport est constitué d'une partie (13) supérieure en forme de plaque et d'une partie (12) inférieure en forme de plaque, la partie (12) inférieure et la partie (13) supérieure formant entre elles la fente (14) de réception, étant éloignées l'une de l'autre élastiquement et pouvant être mises l'une sur l'autre en partant de la position sortie en direction de la position d'introduction.

5. Dispositif d'introduction de carte suivant la revendication 4, **caractérisé en ce que** le premier système de capteur et le deuxième système de capteur ou l'unique élément de capteur est disposé du côté, tourné vers la partie (12) inférieure, de la partie (13) supérieure, ou du côté, tourné vers la partie supérieure, de la partie inférieure.

6. Dispositif d'introduction de carte suivant l'une des revendications 4 et 5, **caractérisé en ce que** le premier système de capteur et/ou le deuxième système de capteur ou l'unique élément de capteur est un commutateur (29).

7. Dispositif d'introduction de carte suivant la revendication 6, **caractérisé en ce que** le commutateur (29) est un contact de repos, par lequel aucune liaison électrique allant d'une source de courant à l'entraînement constitué sous la forme d'un moteur électrique ne peut être interrompue.

8. Dispositif d'introduction de carte suivant les revendications 4 et 7, **caractérisé en ce que** le commutateur (29) peut être commandé par la face supérieure plate ou par la face inférieure plate de la carte.

9. Dispositif d'introduction de carte suivant l'une des revendications précédentes, **caractérisé en ce que** le premier système de capteur et/ou le deuxième système de capteur ou l'unique élément de capteur est disposé près de l'extrémité de la fente (14) de réception, qui est opposée à l'ouverture (16) d'introduction.

10. Dispositif d'introduction de carte suivant la revendication 4, **caractérisé en ce que** le puits a des fentes de guidage s'étendant dans la direction de déplacement du dispositif (4) de transport, fentes dans lesquelles le dispositif (4) de transport est guidé à coulissement par ses bords latéraux.

11. Dispositif d'introduction de carte suivant la revendication 10, **caractérisé en ce que** les fentes de guidages ont une largeur plus grande dans la zone de l'embouchure, dirigée dans le sens de sortie, du puits (3) et se transforment en une largeur plus petite par l'intermédiaire d'une transition (22) en rampe dans le sens d'introduction.
